Europäisches Patentamt

European Patent Office

Office européen des brevets

(11) Numéro de publication: **0 478 860 A1**

# (12) DEMANDE DE BREVET EUROPEEN

(21) Numéro de dépôt: 90402738.0

(22) Date de dépôt: 03.10.90

(51) Int. Cl.5: **B21B 39/24**, F27B 9/38, **B65G 47/248**

(43) Date de publication de la demande:
**08.04.92 Bulletin 92/15**

(84) Etats contractants désignés:
**AT BE CH DE DK ES GB GR IT LI LU NL SE**

(71) Demandeur: **STEIN HEURTEY**
**Z.A.I. du Bois de l'Epine BP No 69**
**F-91130 Ris Orangis(FR)**

(72) Inventeur: **Duchemin, Marc**

**5, rue de la Poste**
**F-91070 Bondoufle(FR)**
Inventeur: **Thoor, Henry-Albert**
**Hameau du Petit Vau**
**F-89500 Villeneuve sur Yonne(FR)**

(74) Mandataire: **Armengaud, Alain**
**Cabinet ARMENGAUD AINE 3, Avenue**
**Bugeaud**
**F-75116 Paris(FR)**

(54) **Dispositif pour assurer le retournement a 90 de produits sidérurgiques de section carrée ou rectangulaire.**

(57) Dispositif pour assurer le retournement a 90° de produits sidérurgiques de section carrée ou rectangulaire, tels que notamment blooms, brames ou billettes, par retournement autour d'une arête de ce produit, caractérisé en ce qu'il comprend des parties fixes (10, 10'), en forme de portiques et reposant sur le sol en enjambant la table de manutention à rouleaux (T) sur laquelle se déplace le produit (P) à retourner, une partie mobile (12) constituée essentiellement d'une poutre maîtresse (20), placée au-dessus de la table de manutention à rouleaux et parallèlement à l'axe longitudinal de cette dernière et de chariots (22, 22') supportant des moyens pour réaliser ladite rotation à 90°, chacun desdits chariots roulant sur un élément (16, 16') de la partie fixe correspondante (10, 10') selon un mouvement oblique de translation de manière que le retournement du produit à 90° s'effectue par un mouvement de rotation et par un mouvement de translation oblique.

FIG. 5

La présente invention est relative à un dispositif ayant pour but de réaliser un retournent à 90° de produits sidérurgiques de section carrée ou rectangulaire.

Dans certaines applications, il est nécessaire de soumettre des produits sidérurgiques tels que des blooms, des brames ou des billettes, à des traitements de pulvérisation sur une ou plusieurs faces, notamment pour limiter l'oxydation et la décarburation de tels produits, avant leur enfournement dans un four à longerons.

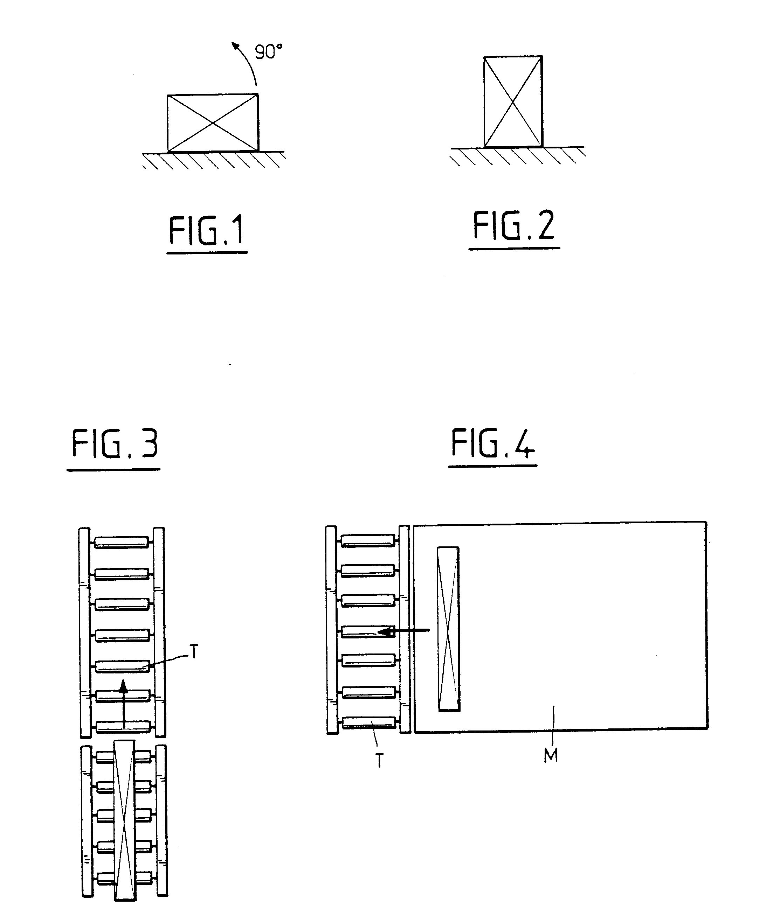

On est donc mené à réaliser des dispositifs permettant de faire pivoter le produit (qui peut être chaud ou froid), du type bloom, brame ou billette, d'une de ses faces sur la suivante par une rotation de 90° comme l'illustrent de façon schématique les figures 1 et 2 des dessins annexés, ce produit étant placé sur une table de manutention à rouleaux qui en assure l'enfournement dans un four.

Le dispositif selon la présente invention, répondant aux objectifs définis ci-dessus, est conçu de façon à retourner un produit provenant soit d'une table à rouleaux T, dans le prolongement de celle-ci (comme on peut le voir sur le schéma de la figure 3 des dessins annexés), soit d'une machine de transfert latéral M, délivrant le produit à retourner, latéralement à la table de manutention à rouleaux T (ainsi qu'on l'a représenté schématiquement sur la figure 4 des dessins annexés).

En conséquence, cette invention a pour objet un dispositif de retournement du type défini ci-dessus permettant de retourner à 90° le produit, par basculement autour de l'une des arêtes de ce dernier, caractérisé en ce qu'il comprend :

- des parties fixes en forme de portiques reposant sur le sol et enjambant la table de manutention à rouleaux sur laquelle se déplace le produit à retourner et,
- une partie mobile constituée principalement d'une poutre maîtresse, placée au-dessus de la table de manutention à rouleaux et parallèlement à l'axe longitudinal de cette dernière et de chariots supportant des moyens pour effectuer la rotation à 90°, chacun desdits chariots roulant sur un élément de l'une desdites parties fixes selon un mouvement oblique de translation, de manière que le retournement à 90° du produit s'effectue par un mouvement de rotation et par un mouvement de translation oblique.

Selon un mode de réalisation préféré de la présente invention, ce dispositif de retournement comprend deux parties fixes en forme de portiques, chacune à une extrémité du dispositif, chaque partie fixe comprenant une jambe verticale et une jambe oblique, et deux chariots reliant ladite poutre maîtresse et supportant les moyens de rotation, chacun desdits chariots étant pourvu de galets ou de rouleaux, roulant sur la jambe oblique correspondante de la partie fixe et des moyens de commande du mouvement de translation pour assurer un déplacement du chariot sur ladite jambe oblique selon ledit mouvement oblique de translation.

Selon une autre caractéristique de l'invention, les moyens prévus sur chaque chariot pour réaliser la rotation à 90° du produit à retourner comprennent : des doigts assurant la préhension dudit produit, fixés sur un arbre porté par ladite poutre maîtresse par l'intermédiaire de paliers et des moyens de commande assurant la rotation dudit arbre et donc des doigts de préhension, par rapport à l'axe des paliers, ces moyens de commande pouvant être réalisés sous la forme de vérins, mécaniques ou hydrauliques, ou d'un système à crémaillères agissant sur ledit arbre par l'intermédiaire de leviers.

D'autres caractéristiques et avantages de la présente invention ressortiront de la description faite ci-après en référence aux dessins annexés qui en illustrent un exemple de réalisation dépourvu de tout caractère limitatif. Sur les dessins :

- les figures 1 et 2 sont des vues schématiques illustrant le but du dispositif de l'invention précisé dans le préambule de la présente description ;
- les figures 3 et 4 sont des vues en plan, à l'appui de l'illustration faite ci-dessus de la conception du dispositif selon l'invention ;
- la figure 5 est une vue en élévation frontale du dispositif selon l'invention et ;
- la figure 6 est une vue en plan de la figure 5.

Ainsi qu'on l'a précisé dans le préambule de la présente description, le dispositif objet de l'invention permet de réaliser le retournement à 90° d'un produit P à partir d'un mouvement de rotation et d'un mouvement de translation oblique, la combinaison de ces deux mouvements permettant de retourner le produit P sur la table à rouleaux T où il repose, ce retournement étant obtenu par simple basculement du produit autour de l'une de ses arêtes (figures 1 et 2).

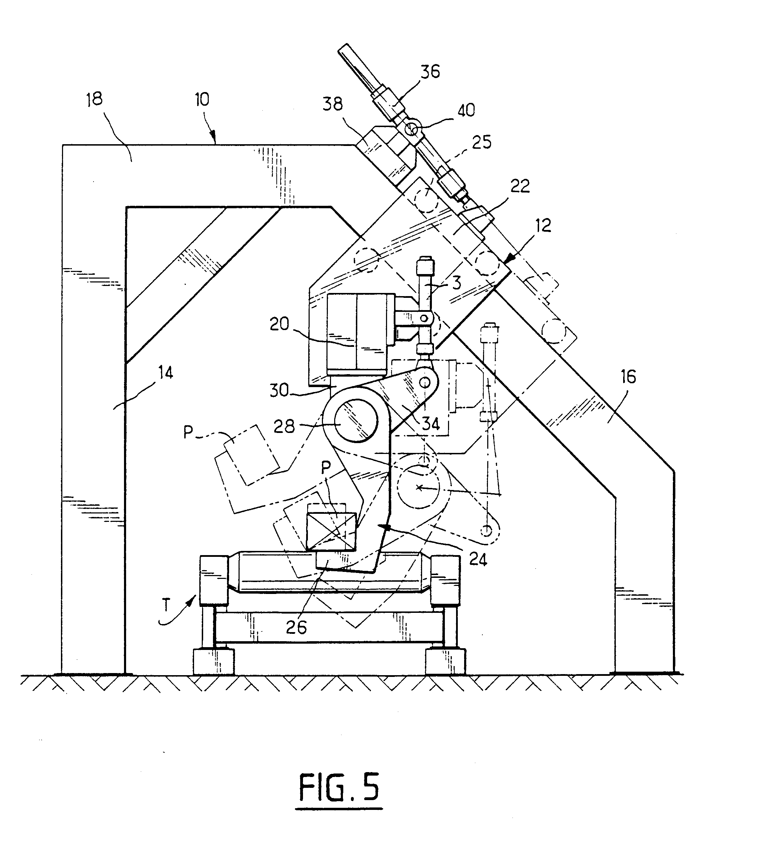

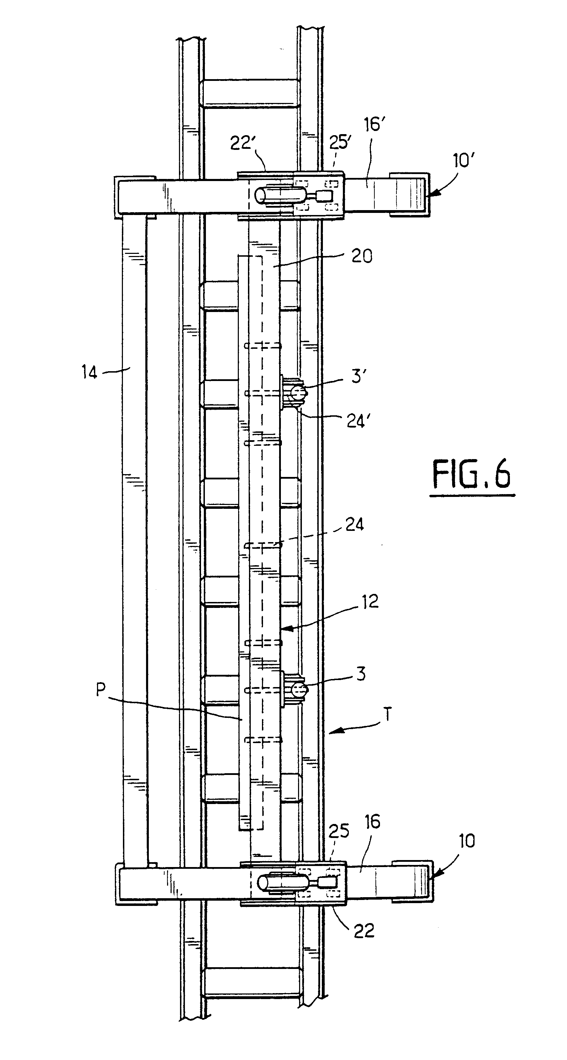

Comme on le voit sur les figures 5 et 6 qui représentent en détail le dispositif de retournement selon la présente invention, ce dispositif comprend essentiellement dans cet exemple de réalisation non limitatif:

a) deux parties fixes, désignées dans leur ensemble par les références 10 et 10', posées sur le sol et enjambant la table à rouleaux T, à chaque extrémité de cette dernière ;

b) une partie mobile, désignée dans son ensemble par la référence 12, qui se déplace par rapport auxdites parties fixes et qui supporte les moyens de rotation à 90° du produit P.

Chacune des parties fixes 10, 10' d'un tel dispositif est réalisée sous la forme d'un portique comprenant une jambe verticale 14, une jambe oblique 16 et une partie supérieure horizontale 18, les jambes 14 et 16 reposant sur le sol de part et d'autre de la table de manutention à rouleaux T.

La partie mobile 12 comprend essentiellement une poutre maîtresse 20, parallèle à l'axe longitudinal de la table à rouleaux T et située au-dessus de cette dernière, cette poutre supportant les moyens de rotation du produit P et reliant deux chariots 22, 22' dont les galets ou rouleaux tels que 25 peuvent se déplacer le long des jambes obliques 16 et 16' des parties fixes 10, 10' selon un mouvement oblique de translation.

A son extrémité inférieure, chaque chariot 22, 22' supporte les moyens de rotation désignés dans leur ensemble par les références 24, 24'. Dans ce mode d'exécution, qui n'a aucun caractère limitatif, chaque moyen de rotation comprend des doigts 26 conçus de façon à assurer la préhension du produit P à retourner, à partir de la table de manutention à rouleaux T, ces doigts de préhension 26, ayant sensiblement la forme de crochets étant fixés sur un arbre 28 supporté par la poutre maîtresse 20 par l'intermédiaire de paliers 30 et, un dispositif de commande 32 permettant de faire tourner l'arbre 28 par rapport à l'axe des paliers 30, par l'intermédiaire de leviers tels que 34.

Les moyens qui assurent l'entraînement des chariots 22, 22' selon un mouvement de translation oblique le long des jambes 16, 16' des parties fixes 10, 10' peuvent être réalisés sous la forme de vérins tels que 36 dont le cylindre est monté sur la partie fixe correspondante par l'intermédiaire d'un support 38 et d'un axe d'articulation 40 et dont la tige est attelée à la partie supérieure du chariot. Les vérins tels que 36 peuvent être du type hydraulique double tige et ils peuvent être synchronisés par transfert de volume. Cependant, il ne s'agit là que d'un exemple de réalisation non limitatif. En effet, la commande de ce mouvement de translation oblique peut être également assurée par tout système approprié, notamment par deux vérins à vis mécanique, synchronisés électriquement ou mécaniquement, ou bien encore par deux systèmes à pignon-crémaillère, également synchronisés électriquement ou mécaniquement.

Les moyens qui sont prévus par l'invention pour faire tourner l'arbre 28 sur lequel sont fixés les doigts de préhension tels que 26, peuvent consister en des vérins hydrauliques ou mécaniques 32 ou en tout système approprié tel que notamment un mécanisme à crémaillère.

Le fonctionnement du dispositif selon l'invention décrit ci-dessus apparaît clairement de l'examen de la figure 5 sur laquelle on a représenté en traits mixtes les déplacements successifs des chariots et des doigts de préhension lors d'un retournement à 90° d'un produit sidérurgique tel qu'un bloom.

Les chariots 22, 22' sont amenés, par l'intermédiaire des moyens décrits ci-dessus (vérins tels que 36), dans une position telle que les doigts de préhension 26, puissent saisir correctement, par translation oblique le long des jambes 16, 16, entre les rouleaux de la table T, le bloom P devant être retourné de 90°, ce mouvement étant obtenu grâce au moyen de commande du mouvement de rotation de ces doigts décrits ci-dessus (vérins 32 - leviers 34 - arbre 28). Les chariots 22, 22' sont ensuite déplacés vers le haut le long des jambes obliques 16, 16' grâce à l'action des vérins tels que 36, ce qui provoque le soulèvement du bloom P, puis par rotation de l'arbre 28 grâce au dispositif de commande de rotation (vérins 32 et leviers 34), on amorce la rotation de 90° du bloom porté par les doigts 26. Il suffit ensuite de ramener les chariots en position basse, par translation vers le bas le long des jambes obliques 16, 16' pour déposer le bloom P, en lui faisant subir un retournement à 90° le long de son arête, sur la table de manutention à rouleaux T. Le système est alors prêt pour effectuer un retournement identique sur le bloom suivant qui se présente sur cette table T.

Il demeure bien entendu que la présente invention n'est pas limitée aux exemples de réalisation décrits et représentés ici mais qu'elle en englobe toutes les variantes. En particulier, le dispositif selon l'invention peut être mis en oeuvre au-dessus d'une table de réception du produit, l'arrivée et l'évacuation de ce dernier après retournement sur 90° comme décrit ci-dessus étant réalisées par voie aérienne, par exemple à l'aide d'un pont.

## Revendications

1. Dispositif pour assurer le retournement à 90° de produits sidérurgiques de section carrée ou rectangulaire, tels que notamment blooms, brames ou billettes, par retournement autour d'une arête de ce produit, caractérisé en ce qu'il comprend des parties fixes (10, 10'), en forme de portiques et reposant sur le sol en enjambant la table de manutention à rouleaux (T) sur laquelle se déplace le produit (P) à retourner, une partie mobile (12) constituée essentiellement d'une poutre maîtresse (20), placée au-dessus de la table de manutention à rouleaux et parallèlement à l'axe longitudinal de cette dernière et de chariots (22, 22') supportant des moyens pour réaliser ladite rotation à 90°, chacun desdits chariots roulant sur un élément (16, 16') de la partie fixe correspondante (10, 10') selon un mouvement oblique de translation de manière que le retournement du produit à 90° s'effectue par un mouvement de rotation et par un mouvement de translation oblique.

2. Dispositif selon la revendication 1, caractérisé en ce qu'il comporte deux parties fixes (10, 10') en forme de portiques, une à chaque extrémité du dispositif, chacune desdites parties fixes comprenant une jambe verticale (14) et une jambe oblique (16) et deux chariots (22, 22') reliant ladite poutre maîtresse et supportant lesdits moyens de rotation, chacun de ces chariots étant pourvu de galets ou de rouleaux (25), roulant sur la jambe oblique correspondante (16) et des moyens de commande du mouvement de translation pour assurer un déplacement des chariots le long desdites jambes obliques, conformément auxdits mouvements de translation oblique.

3. Dispositif selon l'une des revendications 1 ou 2, caractérisé en ce que les moyens prévus sur chaque chariot (22, 22') pour réaliser la rotation selon 90° du produit (P) à retourner comprennent des doigts (26) assurant la préhension du produit, fixés sur un arbre (28) porté par ladite poutre maîtresse (20) par l'intermédiaire de paliers (30) et, des moyens de commande (32, 34) pour réaliser la rotation dudit arbre (28) et donc des doigts préhenseurs (26) par rapport à l'axe des paliers (30).

4. Dispositif selon la revendication 3, caractérisé en ce que les moyens de commande de la rotation des doigts préhenseurs (26) consistent en des vérins (32) agissant sur ledit arbre (28) par l'intermédiaire de leviers (34).

5. Dispositif selon la revendication 3, caractérisé en ce que les moyens de commande de la rotation des doigts préhenseurs (26) consistent en un système à crémaillère agissant sur ledit axe (28).

6. Dispositif selon l'une quelconque des revendications précédentes, caractérisé en ce que la commande du mouvement de translation oblique desdits chariots (22, 22') le long des parties fixes (10, 10') est obtenue par l'intermédiaire de vérins hydrauliques double tige (36), dont les actions sont synchronisées par transfert de volume.

7. Dispositif selon l'une quelconque des revendications 1 à 5, caractérisé en ce que la commande du mouvement de translation oblique desdits chariots (22, 22') le long des parties fixes (10, 10') est obtenue à l'aide d'un système pignons-crémaillères, ou d'un système à vérins à vis mécaniques, dont les fonctionnements sont synchronisés électriquement ou mécaniquement.

FIG.1

FIG.2

FIG.3

FIG.4

FIG. 5

FIG.6

**Office européen
des brevets**

# RAPPORT DE RECHERCHE
# EUROPEENNE

Numéro de la demande

**EP 90 40 2738**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-739 591   (SCHNEIDER) <br> * Pages 2,3; figures * <br> – – – | 1-7 | B 21 B 39/24 <br> F 27 B 9/38 <br> B 65 G 47/248 |
| A | GB-A-570 372   (WELLMAN SMITH OWEN ENGINEERING) <br> * Pages 3,4; figures * <br> – – – | 1-3,5 | |
| A | FR-A-1 074 665   (PFEIFFER) <br> – – – | | |
| A | US-A-2 338 285   (HARRY) <br> – – – | | |
| A | DE-C-1 137 539   (WAGNER & CO.) <br> – – – | | |
| A | EP-A-0 133 877   (DIDIER ENGINEERING) <br> – – – – – | | |

**DOMAINES TECHNIQUES
RECHERCHES (Int. Cl.5)**

B 21 B
B 23 Q
B 65 G
C 21 D
F 27 B
F 27 D

**Le présent rapport de recherche a été établi pour toutes les revendications**

| Lieu de la recherche | Date d'achèvement de la recherche | Examinateur |
|---|---|---|
| La Haye | 27 mars 91 | ROSENBAUM H.F.J. |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons
------------------------------------------------------------
& : membre de la même famille, document
    correspondant